# EUROPEAN PATENT SPECIFICATION

(11) **EP 0 607 735 B1**
(45) Date of publication and mention of the grant of the patent: **06.05.1999**
(21) Application number: 93500002.6
(22) Date of filing: 18.01.1993
(51) Int. Cl.: B29B 17/00, B29B 17/02

(54) **A process for the recovery of polyurethane**
Verfahren zum Rückgewinnung von Polyurethan
Procédé pour la récupération de polyuréthane

(43) Date of publication of application: 27.07.1994
(73) Proprietor: MICROLITE, S.L., E-03330 Crevillente (Alicante) (ES)
(72) Inventor: Candela,Jose Vives, E-03330 Crevillente (Alicante) (ES)
(74) Representative: Alonso Langle, Emilio

(56) References cited:
- EP-A- 0 442 435
- WO-A-92/00177
- GB-A- 1 551 274

## Description

The present invention relates to a process for the recovery of waste polyurethane material according to the preamble of claim 1.

### SUBJECT OF THE INVENTION

The subject of this invention is a process to recover polyurethane which constitutes an effective solution for the elimination of wastes of such material which are not made use of during the manufacturing stage, thereby preventing them from becoming a residue destined for the refuse collection service, where they can never be recycled and they will be a constant ecological encumbrance. Said process is especially designed to recover polyurethane of a minimum density between 0.2 and 0.3, although recovery of foam and all polyurethane types is not discarded.

### THE STATE OF THE ART

As is known, polyurethane is a synthetic resin obtained by the condensation of polyesters or polyesters with isocyanates, and is considered to be an elastomer which competes advantageously with natural latex, one of its uses being the manufacture of soles for footwear.

Industries devoted to said manufacture of soles for footwear from materials and minerals have never been able to propose solutions aimed at the recycling of these raw materials, or their elimination, by which, because of their indestructibility, to prevent the existence of an on-going accumulation of waste which causes a genuine ecological problem, albeit not of the seriousness of other materials, given that polyurethane is non-polluting.

On the other hand, while it is a problem that materials such as polyurethane are virtually indestructible or can only be destroyed by environmentally harmful processes, there can be no question that the remains of used components are dispersed and spread throughout the millions of tons of refuse produced every day, while industrial waste accumulates and so is more in evidence.

In these circumstances, it is of interest, and even fundamental, to be able to recover unused waste and the material rejected in facilities operating in the footwear field, namely in the moulding of polyurethane soles.

In fact, during the injection or moulding process, there are faulty injection operations which do not completely fill the mould: moreover, and inevitably, there are mould wastes from each injection (slivers) caused by the filling of the mould with the injected material, and which are then not used.

At all events, it is clear that in an industry of this type, a great deal of material (polyurethane) is wasted every day, as a result of faulty injections and of the excess material from each moulding operation.

This waste material, as just pointed out, is free, and has only to be collected on a periodic route and recycled so as to be made ready for use, thereby relieving footwear companies and manufacturers of the problem involved in eliminating the polyurethane waste.

Patent EP-A-0442435 refers to a process for the recovery of polyurethane which is then reticulated with chemical compounds by heating and pressing.

Patent GB-A-1551274 refers to a method of reclaiming polyurethane waste for the production of moulding compositions which is effected by thermal degradation and which requires expanding and colouring agents and other chemical compounds.

Application WO 92/00177 describes another process for producing moulded components from cross-linked reaction plastics.

No one of these prior art documents includes the posibility of employing fresh polyurethane with the waste polyurethane material in a specific percentage to obtain a big quality blend.

### DESCRIPTION OF THE INVENTION

The object of the present invention is to recover the reject polyurethane material from certain industries.

This object is attained according to the invention by a process as defined in the claim.

More specifically, the process in the invention is based on a series of operating phases which permit the waste material (polyurethane) to be recovered and, in short, to provide a raw material for use just as if it were the original unused material.

In this sense, the process in the invention is based on an initial phase of selection of the material to be used, ideally in the plant, i.e. by the sole injector or manufacturer, which places the materials in containers according to colour so that such containers hold waste of the same colour.

A second phase then carries out sampling for the removal of foreign materials, extracting components other than those it is sought to recover: it must be remembered that, because of its particular nature, when received in bulk, polyurethane is, if firmly adhered to some other material, extremely difficult to extract. Such residues must therefore be separated out.

Following this sampling phase for the removal of foreign and other bodies from the polyurethane, the product or material is washed to remove dust and foreign particles.

The washed material is then chopped, using any mechanical system or means: being a very resistant material, polyurethane must be cut only with the appropriate tools. Along these lines, mechanical clippers are, while slow, suitable for such cutting. Shears or blades can also be used although, if the product is lumped, such lumps are difficult to cut with mechanical devices of the type referred to.

However, the most appropriate procedure for cutting the material is to use mechanical facilities such as a fixed-blade press comprising a sharp-edged grill forming a reticle at the bottom of a container where a plate operating as a hydraulic ram compresses the material which is then cut by the grill or reticle-shaped blade, forcing the pieces through said grill and expelling them below.

A stroke limiter close to the bottom prevents the ram from damaging the blades so that, with a new load, the production cycle can be resumed, so operating without interruption and cutting the material in sufficient quantities to avoid dead times during the process.

In practice the dimensions or average diameter of the cut polyurethane should be 5 cm or less: this is considered to be the ideal size for a good final result.

The waste polyurethane material is next mixed with fresh polyurethane material, at a rate of between 10% and 25% of weight, i.e. for each kilo of material obtained, between 100 and 250 grams of fresh material must be provided. At less than this proportion, the quality of the end product will suffer, while exceeding 25% represents an unnecessary waste of fresh material.

The fresh polyurethane material can be mixed with the standard material for recovery, mixing in a standard mixer where the blend is compressed and heated, specifically to a temperature between 140 and 160°: compression must be such as to reduce the volume of the recovered and fresh material by between 4 and 6 times in homogenous terms, that is free of gaps or spaces.

The aim therefore of the phase in which the mixture is heated and compressed is to give the material a density of between four and five times the initial value, in order eventually to reach a density equal to between 1.25 and 1.60 times the master density or that of water, taken as 1.

This mass, at the density referred to and held at plasticity temperature, can finally be converted into a raw material for subsequent industrial applications, either used directly for mould injection, or processed with the addition of substances for other uses, e.g. rolled for floor covering or for pressing into parts with industrial applications such as seals, false soles for footwear, heels, etc.

Heat and pressure can be provided using a heated roller train with progressive pressures, or using variable pitch worm extruders. For its part, cutting for new recovered raw material can be done directly from an extruder which, through a block, produces a continuous monofilament which is cut into the appropriate lengths as it emerges. Obviously, this block can have several outlets and the process may be capable of very high output.

The combination of an extruder and a variable pitch worm to create the plasticity and concentration of the mass would give rise to an in situ non-stop process which, as a final result, would produce the recovered material or would make it possible to proceed directly with the injection of components.

According to the process, it is feasible to dye the material obtained in bulk, if colourless: original colours can be maintained if an initial selection is made.

On the other hand, the addition of recovered polyurethane has no other limit than that seen at source in terms of the use of the recovered material: therefore, discounting the fact that the colour cannot be changed if the recovered material is already coloured, the performance of the recovered material is identical to that of the fresh material.

### DESCRIPTION OF THE DRAWINGS

To complete this description and so as to assist in a better understanding of the features of the invention, these Specifications are accompanied by a sheet of drawings, forming an integral part hereof, which shows in diagrammatic form one of the many design alternatives for what might be an installation for implementing the process in the invention.

### A PREFERENTIAL DESIGN OF THE INVENT!ON

Using recovered polyurethane, following a prior selection of waste, and washing and the removal of foreign elements, the waste polyurethane material (1) is placed manually by a feeder (2) in the form of a continuous belt or similar element, in a cutting press (3) made up of a container or deposit whose bottom takes the form of blades (4) in a grill arrangement. The waste polyurethane material (1) dropped into the deposit forming the press (3) is pressed from above by a ram (5) operated by standard means, so pressing the material (1) against the blades (4) and cutting it into portions of the appropriate dimensions, as defined by the opening in the grill formed by said blades (4). The pieces fall into a collector comprising for example a conveyor belt (6) which carries them to the point where they drop into a hopper (7) into which, at the same time, fresh polyurethane material is introduced along the lines indicated by the arrows over said hopper (7), one each for the material to be recovered, which comes from the conveyor belt (6), and for the aforementioned fresh polyurethane material, in all cases in a proportion of between 10% and 25% of weight of fresh material for the waste polyurethane material.

The hopper (7) feeds an extruder (8) located under it and comprising a variable-pitch worm (9). Here, the mixture is compressed and heated: the final section (1) is thermostatically controlled by means of chilling or cooling, whichever may suit, so as to prevent the mass from exceeding temperatures between 140 and 160°C, which is ideal for keeping the material plastic.

The extruder (8) discharges through an outlet (1) where there are resources for the subsequent use of the recovered material, e.g. a direct extrusion nozzle for making granule, or a connection to a rolling facility or injection mould.

Clearly, one of the most rational forms for the implementation of this invention would be to provide industries injecting polyurethane components with a complete facility in line with their needs, so as to recover the used material, thereby not just benefiting from the recovery of waste but also not generating residues of any type.

Another rational application, on a larger scale, would be to build facilities on a joint-benefit basis for manufacturers in a zone or area where independent injectors suffer the problem of waste.

It is not felt necessary to extend this description in order for any expert in the field to grasp the scope of the invention and the benefits deriving therefrom.

The materials, shape, size and arrangement of the components may be changed provided that this does not alter the essence of the invention as defined in the claim.

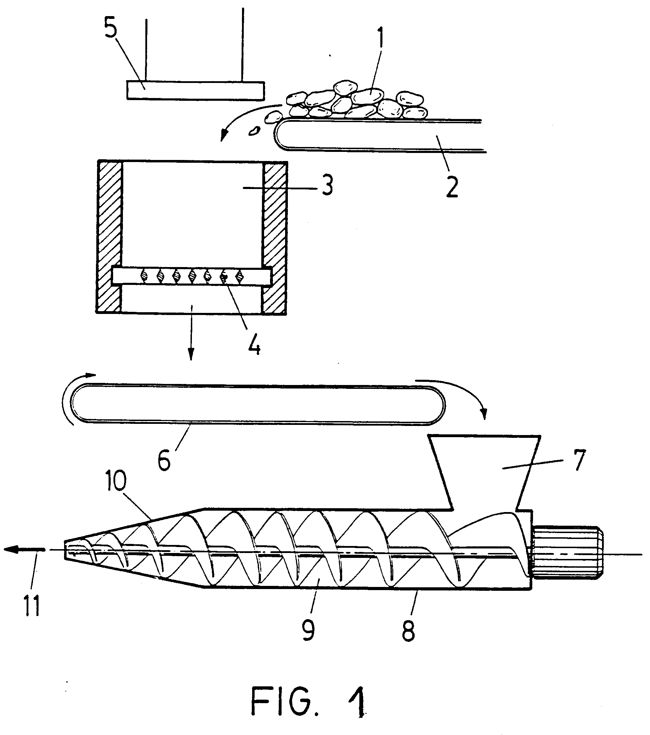

## Claims

1. A process for the recovery of waste polyurethane material from production facilities using polyurethane, for example those manufacturing footwear soles, based on separating the foreign matter of the waste polyurethane material to be recovered, followed by washing and cutting the waste polyurethane material to a diameter of five centimetres or less, characterized in that the waste polyurethane material is mixed with fresh polyurethane material which is added in a quantity of 10 to 25% weight of the total mixture of waste polyurethane and fresh polyurethane, and said mixture of waste polyurethane material with fresh polyurethane material is compressed and heated between 140 and 160 °C.

## Patentansprüche

1. Verfahren zur Rückgewinnung von Polyurethanabfallmaterial aus Polyurethan verwendenden Produktionsanlagen, zum Beispiel Anlagen zur Herstellung von Schuhsohlen, das darauf beruht, die Fremdstoffe von dem rhckzugewinnenden Polyurethan zu trennen, wonach das Polyurethanmaterial gewaschen und auf einen Durchmesser von bis zu fünf Zentimetern geschnitten wird, dadurch gekennzeichnet, dass das Polyrethanabfallmaterial mit neuem Polyurethanmaterial gemischt wird, das in einer Menge von 10 bis 25 Gewichtsprozent der gesamten Mischung von Polyurethanabfallmaterial und neuem Polyurethanmaterial zugegeben wird, und dass die genannte Mischung aus Polyurethanabfallmaterial und neuem Polyurethanmaterial zusammengepresst wird und auf Temperaturen von 140 bis 1601C erhitzt wird.

## Revendications

1. Procédé de récupération de matériau en poliuréthanne résiduel d'installations de production utilisant du poliuréthanne, par exemple les installations fabriquant des semelles de chaussures, basé sur la séparation du matériau étranger du matériau en poliuréthanne à récupérer, suivi du lavage et du découpage du matériau en polyuréthanne jusqu'à un diamètre inférieur ou égal à cinq centimètres, caractérisé par le fait que le matériau en polyuréthanne résiduel est mélangé à du matériau en polyuréthanne nouveau, ce dernier est ajouté dans une quantité comprise entre 10 et 25 % en poids du mélange total en polyuréthanne résiduel et du polyuréthanne nouveau, ce mélange de matériau en polyuréthanne résiduel et de matériau en polyuréthanne nouveau est comprimé et chauffé à une température comprise entre 140 et 160° C.
